Europäisches Patentamt

(19) European Patent Office

Office européen des brevets

(11) Veröffentlichungsnummer: **0 186 737**
**B1**

(12) **EUROPÄISCHE PATENTSCHRIFT**

(45) Veröffentlichungstag der Patentschrifft:
17.01.90

(21) Anmeldenummer: 85112536.9

(22) Anmeldetag: 03.10.85

(51) Int. Cl. ⁴: **G 06 K 13/08**

(54) **Aufnahmeeinheit für eine einen elektronischen Schaltkreis enthaltende Datenkarte.**

(30) Priorität: 11.12.84 DE 3445185

(43) Veröffentlichungstag der Anmeldung:
09.07.86 Patentblatt 86/28

(45) Bekanntmachung des Hinweises auf die Patenterteilung:
17.01.90 Patentblatt 90/03

(84) Bennante Vertragsstaaten:
**DE FR GB IT NL SE**

(56) Entgegenhaltungen:
EP-A-0 041 261
DE-A-3 235 654
DE-B-2 705 534
FR-A-2 492 213
GB-A-2 124 420

(73) Patentinhaber: **Nixdorf Computer Aktiengesellschaft**
**Fürstenallee 7**
**D-4790 Paderborn (DE)**

(72) Erfinder: **Murschall, Werner**
**Birkenstrasse 11a**
**D-4817 Leopoldshöhe (DE)**
Erfinder: **Neumann, Gerd**
**Scharmeder Strasse 99**
**D-4790 Paderborn (DE)**

(74) Vertreter: **Schaumburg, Thoenes & Englaender**
**Mauerkircherstrasse 31 Postfach 86 07 48**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Aufnahmeeinheit für eine einen elektronischen Schaltkreis enthaltende Datenkarte für ein mittels dieser in Betrieb zu setzendes Gerät, umfassend einen ein Aufnahmefach für die Datenkarte aufweisenden, hinter einer Gehäusewand der Aufnahmeeinheit angeordneten Einschubrahmen, der zwischen einer Ein-/Ausgabestellung, in der das Aufnahmefach mit einem Ein-/Ausgabeschlitz in der Gehäusewand fluchtet, und einer Betriebsstellung verschwenkbar ist, in der Kontaktelemente der Aufnahmeeinheit durch eine Aussparung des Einschrubrahmens hindurch an Kontaktelementen der eingeschobenen Datenkarte anliegen, wobei der Einschubrahmen in seine Ein-/Ausgabestellung vorgespannt ist, eine elastisch auslenkbare Rückstelleinrichtung, die im Bereich des dem Ein/Ausgabeschlitz fernen Endes des Aufnahmefaches angeordnet ist und die eingeschobene Datenkarte entgegen der Einschubrichtung vorspannt, und Arretierungsmittel zum Festhalten des Einschubrahmens in der Betriebsstellung mit mindestens einem Rastvorsprung.

Bei einer in der EP-A1-41 261 beschriebenen Lösung wird der Einschubrahmen in der Ein-/Ausgabestellung aus der Frontplatte des Gerätes herausgeklappt, so daß ein Ein-/Ausgabeschlitz zum Einführen bzw. zum Herausnehmen der Karte freigegeben wird. In der Betriebsstellung dagegen ist der Einschubrahmen so eingeklappt, daß seine eine Seite völlig mit der Gerätefrontplatte fluchtet und der Ein-/Ausgabeschlitz verdeckt ist. Zum Festhalten des Einschubrahmens in der Betriebsstellung dient ein relativ komplizierter mechanischer Verriegelungsmechanismus, der durch Knopfdruck von außen her gelöst werden kann, so daß der Einschubrahmen unter der Wirkung einer Vorspannfeder in seine Ein/Ausgabestellung überführt wird.

Eine Aufnahmeeinheit der eingangs genannten Art ist aus der FR-A-2 492 213 bekannt. Diese Druckschrift beschreibt ein Kartenlesegerät mit einem Einschubrahmen, in den die Karte gegen Federkraft einschiebbar ist, wobei die Karte in der Betriebsstellung gegen eine unterhalb des Einschubschlitzes angeordnete Gehäusewand gespannt wird. Der Einschubrahmen wird in seinen beiden Stellungen durch elektromechanisch betätigbare Verriegelungsmittel gehalten. Im Fall einer Betriebsstörung oder eines Stromausfalles ist es damit nicht möglich, die Karte wieder aus dem Gerät zurückzuerhalten.

Der Erfindung liegt die Aufgabe zugrunde, eine in ihrem Aufbau einfache, in der Herstellung preiswerte und einfach und zuverlässig zu bedienende Aufnahmeeinheit der eingangs genannten Art anzugeben.

Diese Aufgabe wird erfindungsgemäß dadurch gelöst, daß der Rastvorsprung von einer parallel zum Ein-/Ausgabeschlitz an der Innenseite der Gehäusewand angeordneten Rastleiste gebildet ist, welche den dem Ein-/Ausgabeschlitz zugewandten Rand der Datenkarte in der Betriebsstellung des Einschubrahmens übergreift, und daß die Gehäusewand in einem mittleren Bereich des Ein-/Ausgabeschlitzes eine die Rastleiste unterbrechende Aussparung aufweist.

Bei der erfindungsgemäßen Lösung entfällt der aus dem Stand der Technik bekannte aufwendige Verriegelungsmechanismus. Die eingeschobene Datenkarte selbst dient mit zur Arretierung des Einschubrahmens in der Betriebsstellung. Die Arretierung kann dadurch gelöst werden, daß die Karte gegen die von der Rückstelleinrichtung ausgeübte Kraft in das Aufnahmefach heineingedrückt wird, so daß sie an der Rastleiste vorbeigeführt werden kann, wenn der Einschubrahmen unter der Wirkung einer Vorspannfeder in seine Ein-/Ausgabestellung verschwenkt wird. Die die Rastleiste unterbrechende Aussparung ermöglicht es, die Datenkarte, die normalerweise in der Betriebsstellung hinter den Ein-/Ausgabeschlitz aufweisenden Gehäusewand liegt, beim Lösen der Arretierung bequem zu erreichen.

Die Rückstelleinrichtung kann bei einer besonders einfachen Ausführungsform der Erfindung von Druckfedern gebildet sein, die im Einschubrahmen derart angeordnet sind, daß sie in das Aufnahmefach hineinragen und den dem Ein/Ausgabeschlitz fernen Rand der eingeschobenen Datenkarte beaufschlagen. Selbstverständlich kann auch ein beweglicher Boden in dem Aufnahmefach vorgesehen sein, der durch die Druckfedern beaufschlagt wird und seinerseits an dem beaufschlagten Rand der eingeschobenen Datenkarte anliegt.

Die Aufnahmeeinheit kann als Baugruppenträger ausgebildet sein, der in ein Gestell oder ein Fach des durch die Datenkarte in Betrieb zu setzenden Gerätes einschiebbar ist. Dabei ist der Einschubrahmen an einer Leiterplatte befestigt, die eine Schaltungsanordnung trägt, welche in Verbindung mit der Schaltungsanordnung der Datenkarte die zur Steuerung des Gerätes erforderlichen Signale erzeugt.

Trotz ihres einfachen Aufbaues bietet die erfindungsgemäße Aufnahmeeinheit zumindest die gleichen Sicherheiten gegen betrügerische Manipulationen wie die eingangs beschriebene bekannte Aufnahmeeinheit.

Weitere Merkmale und Vorteile der Erfindung ergeben sich aus der folgenden Beschreibung, welche in Verbindung mit den beigefügten Zeichnungen die Erfindung anhand zweier Ausführungsbeispiele erläutert.

Es zeigen:

Fig. 1    eine Draufsicht auf eine Datenkarte mit einem in der Datenkarte enthaltenen integrierten Schaltkreis,

Fig. 2    eine Draufsicht auf den Einschubrahmen mit eingeschobener Datenkarte,

Fig. 3    einen Schnitt längs Linie III – III in Fig. 2,

Fig. 4    eine Frontansicht der Aufnahmeeinheit in Richtung des Pfeiles A in Fig. 2 und

Fig. 5    eine der Fig. 2 entsprechende Draufsicht auf einen Einschubrahmen gemäß einer zweiten Ausführungsform der Erfindung.

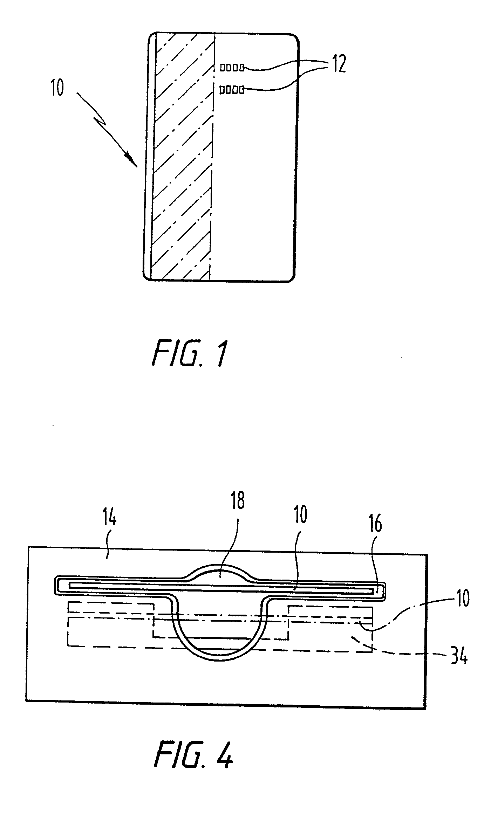

In Fig. 1 erkennt man eine allgemein mit 10 bezeichnete Datenkarte, die eine elektronische Schaltungsanordnung in Form einer nichtdargestellten integrierten Schaltung enthält. Deren Ein- und Ausgänge sind mit Kontaktelementen 12 verbunden, die an der Oberfläche der Datenkarte 10 angeordnet sind. Über diese Kontaktelemente 12 kann die Datenkarte mit Gegenkontaktelementen in einer Aufnahmeeinheit in Berührung treten, die mit einem durch die Datenkarte in Betrieb zu setzenden Gerät verbunden sind. Die Kontaktelemente 12 können je nach Bauart der Aufnahmeeinheit auch an anderen Stellen, beispielsweise entlang den Rändern der Datenkarte angeordnet sein. Das in Fig. 1 mit strichpunktierten Linien schraffierte Feld der Datenkarte kann beispielsweise mit Einprägungen versehen sein.

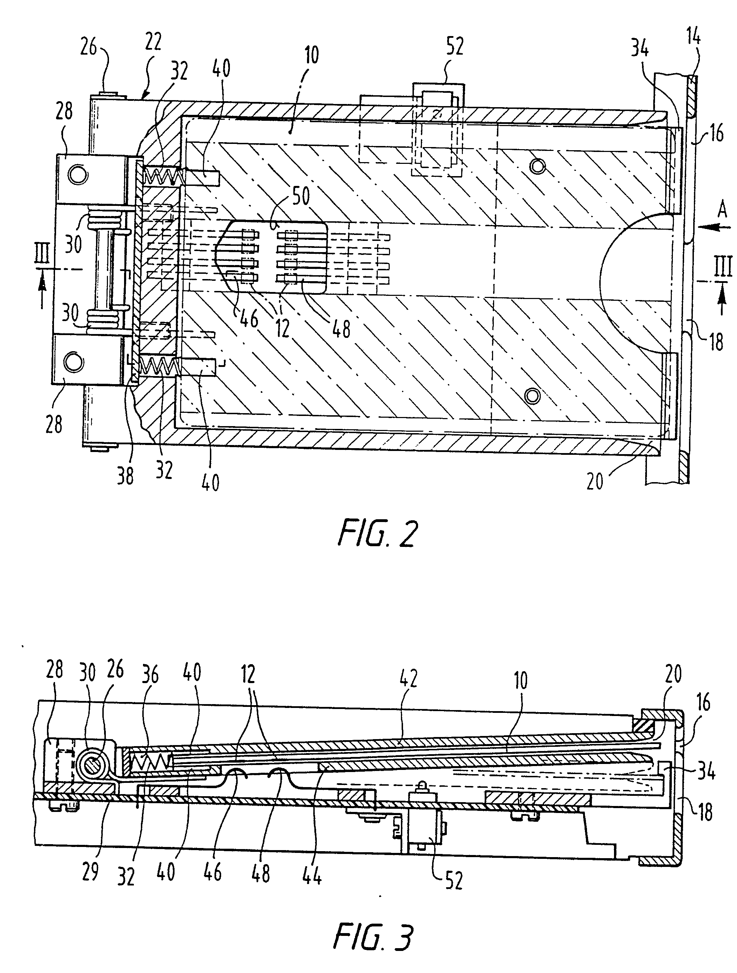

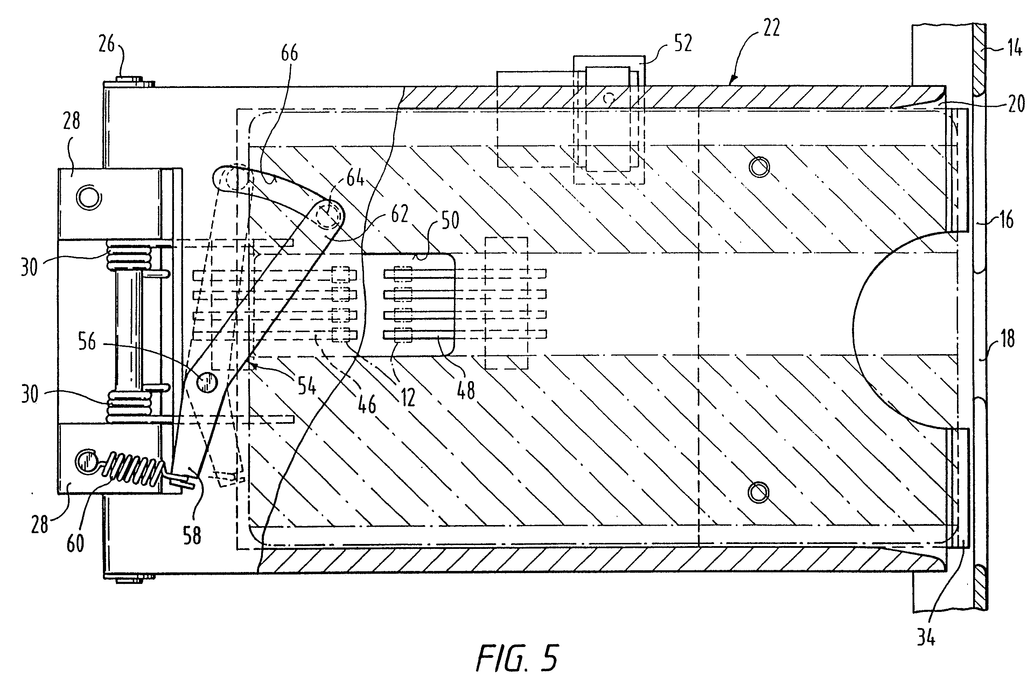

In den Fig. 2 bis 4 ist die zur Aufnahme der Datenkarte 10 bestimmte Einheit gemäß einer ersten Ausführungsform der Erfindung dargestellt. Sie ist in Form eines Baugruppenträgers für elektronische Bauelemente ausgebildet, der in ein Gestell oder Fach eines durch die Datenkarte 10 in Betrieb zu nehmenden Gerätes einschiebbar ist. In Fig. 4 blickt man auf die Frontwand 14 des im übrigen nicht dargestellten Rahmens dieses Baugruppenträgers. In der Frontwand 14 ist ein Ein-/Ausgabeschlitz 16 für die Datenkarte 10 ausgebildet. Im mittleren Abschnitt des Ein/Ausgabeschlitzes 16 weist die Frontwand 14 eine muldenartige Vertiefung 18 auf, innerhalb der auch der Ein-/Ausgabeschlitz 16 so erweitert ist, daß die Datenkarte 10 in ihren beiden möglichen Stellungen mit der Hand erfaßt werden kann, wie dies später noch im einzelnen beschrieben wird.

Die Datenkarte 10 ist durch den Ein-/Ausgabeschlitz 16 in das Aufnahmefach 20 eines allgemein mit 22 bezeichneten Einschubrahmens einschiebbar, der mit seinem der Frontwand 14 fernen Ende um eine zur Frontwand 14 parallele Schwenkachse 26 zwischen einer Ein-/Ausgabestellung und einer Betriebsstellung an einem Lagerblock 28 verschwenkbar gelagert ist, der seinerseits an einer mit dem Rahmen des Baugruppenträgers bzw. der Aufnahmeeinheit verbundenen Leiterplatte 29 befestigt ist. Der Einschubrahmen 22 wird durch Torsionsfedern 30 in seine Ein-/Ausgabestellung vorgespannt, in der das Aufnahmefach 20 mit dem Ein-/Ausgabeschlitz 16 fluchtet. Die Torsionsfedern 30 stützen sich dabei mit ihrem jeweiligen einen Ende an dem Lagerblock 28 und mit ihrem jeweiligen anderen Ende an dem Einschubrahmen 22 ab. Gegen die Vorspannung dieser Torsionsfedern 30 kann der Einschubrahmen 22 in den Fig. 3 und 4 nach unten gedrückt werden, so daß er die in der Fig. 3 durch gestrichelte Linien wiedergegebene Betriebsstellung einnimmt, in der das Aufnahmefach 20 unzugänglich ist.

Um den Einschubrahmen 22 in der Betriebsstellung festzuhalten, sind in dem Einschubrahmen 22 nahe dem der Frontwand 14 fernen Ende des Einschubfaches 20 Druckfedern 32 vorgesehen, welche die eingeschobene Datenkarte 10 in Richtung auf die Frontwand 14 drücken, so daß sie nach dem Verschwenken des Einschubrahmens 22 mit ihrem der Frontwand 14 zugewandten Rand eine im Querschnitt nasenförmige Rastleiste 34 hintergreift, wie dies in Fig. 3 durch gestrichelte Linien dargestellt ist. Die Druckfedern 32 sind dabei in Bohrungen 36 in dem Einschubrahmen 22 geführt, stützen sich mit ihren einen Enden an einer an den Einschubrahmen 22 angeschraubten Leiste 38 ab und ragen mit ihren freien Enden in das Einschubfach 20 hinein, wobei sie in teilzylindrischen Vertiefungen 40 innerhalb der das Einschubfach 20 begrenzenden Boden- und Deckfläche 42 bzw. 44 geführt sind.

In der Betriebsstellung des Einschubrahmens 22 liegen die Kontaktelemente 12 der Datenkarte 10 an Kontaktfedern 46, 48 an, die unterhalb des Einschubrahmens 22 an der Leiterplatte 29 der Aufnahmeeinheit befestigt sind. Die Leiterplatte 29 trägt die Auswerte- oder Steuerschaltung, die in Verbindung mit der Schaltungsanordnung der Datenkarte 10 Steuersignale zur Steuerung des Gerätes erzeugt, das durch die Datenkarte 10 in Betrieb genommen werden soll. Die Kontaktfedern 46, 48 greifen dabei durch eine Aussparung 50 im Boden 44 des Einschubrahmens 22. Gleichzeitig wirkt der Einschubrahmen 22 in der Betriebsstellung auf einen Mikroschalter 52, der sicherstellt, daß eine Inbetriebnahme des durch die Datenkarte 10 zu steuernden elektrischen Gerätes erst dann erfolgt, wenn die Datenkarte 10 in das Aufnahmefach 20 eingeschoben und der Einschubrahmen 22 in der Betriebsstellung arretiert ist. Wie man dabei erkennt, ist eine Arretierung des Einschubrahmens 22 nur dann möglich, wenn die Datenkarte 10 in das Aufnahmefach 20 eingeschoben ist, da sie zur Arretierung selbst benötigt wird. Ein weiterer Vorteil der erfindungsgemäßen Ausbildung besteht darin, daß die Datenkarte beim Einrasten hinter der Rastleiste 34 an den Kontaktfedern 46 entlang verschoben wird, so daß diese auf die Kontaktelemente 12 aufgleiten. Durch dieses Gleiten der Kontaktfedern 46, 48 auf den Kontaktelementen 12 der Datenkarte 10 wird ein zuverlässiger Kontakt zwischen den aneinander anliegenden Kontaktelementen hergestellt.

Das Entriegeln des Einschubrahmens 22 erfolgt auf einfache Weise dadurch, daß man die Datenkarte 10 wieder in das Aufnahmefach 20 hineindrückt, so daß sie von der Rastleiste 34 freikommt, wobei der Einschubrahmen 22 durch die Torsionsfedern 30 in seine Ein-/Ausgabestellung verschwenkt wird, in welcher die Datenkarte 10 aus dem Aufnahmefach 20 herausgezogen werden kann.

Die Ausführungsform gemäß Fig. 5 unterscheidet sich von jener der Fig. 2 bis 4 nur durch die Art der Rückstellmittel, welche die Datenkarte 10 in Richtung auf die Frontwand 14 verschieben. Gleiche Teile sind daher wieder mit gleichen Bezugszeichen versehen.

Die Rückstellmittel umfassen einen zweiarmigen Hebel 54, der um eine zur Schwenkachse 26 und zur Einschubrichtung der Datenkarte 10 senkrechte Schwenkachse 56 schwenkbar an dem Einschubrahmen 22 gelagert ist. An dem kürzeren Arm 58 des zweiarmigen Hebels 54 greift eine Zugfeder 60 an, die mit ihrem anderen Ende an dem Lagerbock 28 befestigt ist. Am freien Ende des längeren Hebelarmes 62 des zweiarmigen Hebels 54 ist ein Mitnehmer 64 vorgesehen, der durch einen in der Deckfläche 42 des Einschubrahmens 22 ausgebildeten bogenförmigen Schlitz 66 in das Aufnahmefach 20 eingreift. Wird eine Datenkarte 10 in das Aufnahmefach 20 eingeschoben, so stößt sie an dem Mitnehmer 64 an und verschwenkt den doppelarmigen Hebel 54 entgegen der Wirkung der Zugfeder 60 in die in der Fig. 5 durch gestrichelte Linien eingezeichnete Stellung. Wenn der Einschubrahmen 22 dann in seine Betriebsstellung gedrückt wird, bewirkt die Vorspannung des doppelarmigen Hebels 54, daß die Datenkarte 10 in Richtung auf die Frontwand 14 bewegt wird und dabei hinter der Rastleiste 34 einrastet, so daß der Einschubrahmen 22 in seiner Betriebsstellung gehalten wird. Die übrigen Teile und Funktionen der Aufnahmeeinheit gemäß Fig. 5 stimmen mit jenen der anhand der Fig. 2 bis 4 beschriebenen Ausführungsform überein.

## Patentansprüche

1. Aufnahmeeinheit für eine einen elektronischen Schaltkreis enthaltende Datenkarte (10) für ein mittels dieser in Betrieb zu setzendes Gerät, umfassend einen ein Aufnahmefach (20) für die Datenkarte (10) aufweisenden, hinter einer Gehäusewand (14) der Aufnahmeeinheit angeordneten Einschubrahmen (22), der zwischen einer Ein/Ausgabestellung, in der das Aufnahmefach (20) mit einem Ein-/Ausgabeschlitz (16) in der Gehäusewand (14) fluchtet, und einer Betriebsstellung verschwenkbar ist, in der Kontaktelemente (46, 48) der Aufnahmeeinheit durch eine Aussparung des Einschubrahmens (22) hindurch an Kontaktelementen (12) der eingeschobenen Datenkarte (10) anliegen, wobei der Einschubrahmen (22) in seine Ein-/Ausgabestellung vorgespannt ist, eine elastisch auslenkbare Rückstelleinrichtung (32; 54, 60), die im Bereich des dem Ein-/Ausgabeschlitz (16) fernen Endes des Aufnahmefaches (20) angeordnet ist und die eingeschobene Datenkarte (10) entgegen der Einschubrichtung vorspannt, und Arretierungsmittel zum Festhalten des Einschubrahmens (22) in der Betriebsstellung mit mindestens einem Rastvorsprung (34), dadurch gekennzeichnet, daß der Rastvorsprung von einer parallel zum Ein-/Ausgabeschlitz (16) an der Innenseite der Gehäusewand (14) angeordneten Rastleiste (34) gebildet ist, welche den dem Ein-/Ausgabeschlitz zugewandten Rand der Datenkarte (10) in der Betriebsstellung des Einschubrahmens (22) übergreift, und daß die Gehäusewand (14) in einem mittleren Bereich des Ein-/Ausgabeschlitzes (16) eine die Rastleiste (34) unterbrechende Aussparung (18) aufweist.

2. Aufnahmeeinheit nach Anspruch 1, dadurch gekennzeichnet, daß die Rückstelleinrichtung von Druckfedern (32) gebildet ist, die im Einschubrahmen (22) derart angeordnet sind, daß sie in das Aufnahmefach (20) hineinragen und den dem Ein-/Ausgabeschlitz (16) fernen Rand der eingeschobenen Datenkarte (10) beaufschlagen.

3. Aufnahmeeinheit nach Anspruch 1 oder 2, dadurch gekennzeichnet, daß der Einschubrahmen (22) an einer Leiterplatte (29) befestigt ist, die eine Auswerte- und Steuerschaltung trägt, die in Verbindung mit der Schaltungsanordnung der Datenkarte (10) Signale zur Steuerung des durch die Datenkarte (10) in Betrieb zu setzenden Gerätes erzeugt, und daß die Leiterplatte an einem Trägerrahmen (14) befestigt ist, der in ein Gestell oder Fach des Gerätes einschiebbar ist.

## Revendications

1. Unité de réception pour une carte de données (10) contenant un circuit de commande électronique pour un appareil à mettre en service au moyen de cette carte, ladite unité de réception comprenant un cadre intermédiaire (22) disposé derrière une paroi (14) du boîtier de l'unité de réception et présentant une cavité de réception (20) pour la carte de données (10), lequel peut pivoter entre une position d'entrée-sortie dans laquelle la cavité de réception (20) est située dans le prolongement d'une fente d'entrée-sortie (16) ménagée dans la paroi (14) du boîtier et une position de service dans laquelle des éléments de contact (46, 48) de l'unité de réception viennent s'appliquer contre des éléments de contact (12) de la carte de données (10) introduite, en passant à travers un évidement du cadre intermédiaire (22), le cadre intermédiaire (22) étant rappelé dans sa position d'entrée-sortie, un dispositif d'éjection (32; 54, 60) sortant élastiquement qui est disposé dans la zone de l'extrémité de la cavité de réception (20) située à l'opposé de la fente d'entrée-sortie (16) et qui maintient une pression à l'encontre du sens d'introduction sur la carte de données (10) introduite, ainsi que des moyens de blocage pour maintenir le cadre intermédiaire (22) dans la position de service avec au moins une saillie de verrouillage (34), caractérisée en ce que la saillie de verrouillage est formée par un rebord de verrouillage (34) disposé parallèlement à la fente d'entrée-sortie (16) sur la face intérieure de la paroi (14) du boîtier, lequel s'engage par dessus le bord de la carte de données (10) tourné vers la fente d'entrée-sortie lorsque le cadre intermédiaire (22) est en position de service, et en ce que la paroi (14) du boîtier présente dans une partie médiane de la fente d'entrée-sortie (16) un évidement (18) interrompant le rebord de verrouillage (34).

2. Unité de réception selon la revendication 1, caractérisée en ce que le dispositif d'éjection est formé par des ressorts de pression (32) qui sont disposés dans le cadre intermédiaire (22) de telle sorte qu'ils font saillie à l'intérieur de la cavité de réception (20) et appuient sur le bord de la carte de données (10) introduite situé à l'opposé de la fente d'entrée-sortie (16).

3. Unité de réception selon la revendication 1 ou 2, caractérisée en ce que le cadre intermédiaire (22) est fixé sur une plaquette de circuits imprimés (29) portant un circuit d'exploitation et de commande qui, en liaison avec le montage de circuits de la carte de données (10), produit des signaux pour la commande de l'appareil à mettre en service par la carte de données (10), et en ce que la plaquette de circuits imprimés est fixée à un cadre support (14) qui peut être introduit dans un bâti ou un compartiment de l'appareil.

**Claims**

1. A unit for receiving a data card (10) containing an electronic circuit arrangement and adapted to set a device into operation, the unit comprising an insertion frame (22) comprising a compartment (20) for receiving the data card (10) and disposed behind a casing wall (14) of the receiving unit and pivotable between an input/output position in which the input/output slot (16) of the receiving compartment (20) is flush with the casing wall (14) and an operating position in which the contact elements (46, 48) of the receiving unit extend through a recess in the insertion frame (22) and abut contact components (12) of the inserted data card (10), the insertion frame (22) being biased into its input/output position, the unit also comprising a resiliently deflectable resetting device (32; 54, 60) disposed near the end of the receiving compartment (20) remote from the input/output slot (16) and biasing the inserted data card (10) against the insertion direction, and locking means comprising at least one locking projection (34) for holding the insertion frame (22) in the operating position, characterised in that the locking projection comprises a strip (34) disposed on the inside of the casing wall (14) parallel to the input/output slot (16) and extending over the edge of the data card (10) facing the input/output slot when the insertion frame (22) is in the operating position, and the casing wall (14) has a recess (18) interrupting the locking strip (34) in a central region of the input/output slot (16).

2. A receiving unit according to claim 1, characterised in that the resetting device is made up of compression springs (32) disposed in the insertion frame (22) so that they project into the receiving compartment (20) and act on the edge of the inserted data card (10) remote from the input/output slot (16).

3. A receiving unit according to claim 1 or 2, characterised in that the insertion frame (22) is secured to a printed circuit board (24) which bears an evaluating and control circuit which, in conjunction with the circuit arrangement on the data card (10), generates signals for actuating the device set into operation by the data card (10), and the printed circuit board is secured to a bearing frame (14) insertable into a rack or compartment of the device.

*FIG. 1*

*FIG. 4*

FIG. 2

FIG. 3

FIG. 5

EP 0 186 737 B1